# EUROPEAN PATENT SPECIFICATION

(11) **EP 1 224 359 B1**
(45) Date of publication and mention of the grant of the patent: **08.10.2008**
(21) Application number: 00914206.8
(22) Date of filing: 23.03.2000
(51) Int. Cl.: E02F 9/10, B66C 23/62, B62D 21/18

(54) **CRANE STRUCTURE AND A METHOD OF EXTENDING ITS HEIGHT**
KRANSTRUKTUR UND VERFAHREN ZUR DESSEN HÖHENVERLÄNGERUNG
STRUCTURE DE GRUE ET PROCEDE DE SA PROLONGATION VERTICALE

(30) Priority: 01.10.1999 FI 990417 U
(43) Date of publication of application: 24.07.2002
(73) Proprietor: Mantsinen Group Ltd Oy, 80400 Ylämylly (FI)
(72) Inventor: KALLIO, Kalevi, FIN-80400 Ylämylly (FI)
(74) Representative: Hjelt, Dag Silvio Hjalmar Andrea
(86) International application number: PCT/FI2000/000238
(87) International publication number: WO 2001/025548

(56) References cited:
- DE-A1- 3 337 911
- DE-A1- 3 403 597
- GB-A- 1 173 524
- US-A- 4 953 720

## Description

The present invention relates to a materials handling crane, which is based on a modified digger or the like basic machine and which can be utilized for a large variety of hoisting operations. The present invention relates, especially, to a crane structure, which can be extended in vertical direction, and which is based on a basic machine known *per se,* as well as to a method for modifying such a crane structure based on a basic machine.

There are a great number of applications for using a long boom crane which is a modification based on a high body digger. Cranes of different heights are built for different needs, and then the height of the body can be defined at the planning stage. However, using a crane built for a certain purpose in new applications is restricted by the fact that the height of the body cannot be changed or the task would be too complicated in relation to the benefit which could be achieved. On the other hand, the height requirements for a work site crane vary, and when a crane is transferred from one work site to another one should be able rapidly to adapt the height of the machine to the need. The transport of a high body crane from one work site to another is also difficult and for some kinds of cranes even impossible.

GB-A-1173524 corresponds to the preambles of claims 1 and 7. The crane structure can be split on the level of the crane structure's upper body to insert a desired number of extension modules by fixing them to the suitably adapted members. The lower body at the level of the arrangements for moving the construction machine remains unaffected.

According to the invention, there is provided an improved crane structure according to claim 1 and a method for modifying a crane structure according to claim 7.

The present inventive arrangement, the characteristics of which being evident from the appended claims, has been developed in order to solve these problems related to prior art Thus, the arrangement according to the present invention is characterized in that a lower body of a basic machine comprising an upper carriage which can be turned, preferably freely rotated 360°, is extended vertically by means of an vertical extension body of a modular structure, so that said lower body of said basic machine is modified to include a modular body extension adapter, which renders pos-sible the introduction of one or several intermediate body segments between the parts of the original lower body, where said intermediate body segments are constituted by extension modules.

The present invention will now be described in more detail with reference to some favorable embodiments thereof as well as to the appended drawings, wherein
- Figure 1: discloses a conventional construction machine known *per se,* which machine can be commercially obtained,
- Figure 2, 2a, 2b: disclose said working machine as a part of the inventive arrangement, as well as various modular segments included in the arrangement, and
- Figure 3: discloses a construction machine, which has been modified in accordance with one embodiment of the present invention, the machine arrangement including modular extension segments.

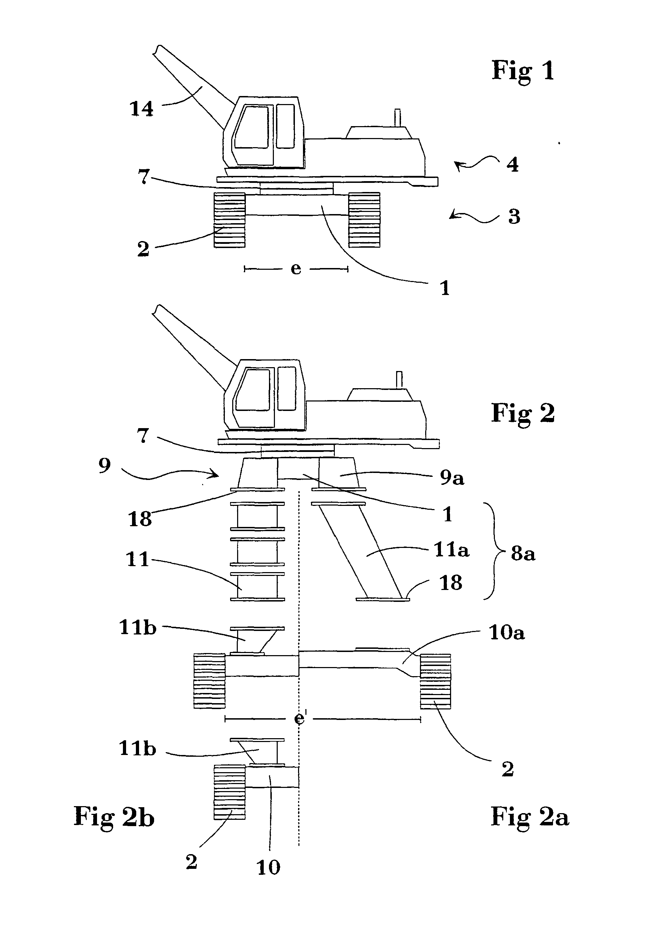

According to Figure 1 a basic machine known *per se*, such as a digger, a harbor crane or the like crane-like construction machine comprises a lower body 3 as well as an upper carrier structure 4 which is attached to said body, usually so that the carrier can be rotated 360°, said upper carrier usually comprising the construction machine's engine and cab, where said cab favorably is arranged at the end of a boom arrangement, according to the favorable embodiment disclosed in

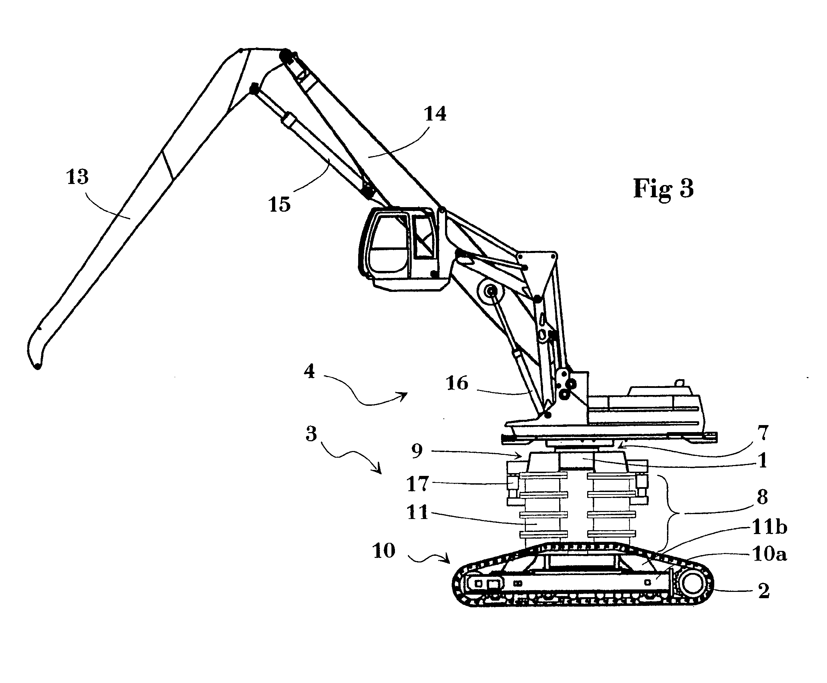

Figure 3. A turning machinery including turning bearings 7 is arranged between said upper carrier 4 and said lower body 3. This construction machine can be any already existing construction machines or the like, or it can be one that has been designed especially for this purpose.

A hoisting boom structure 14 known *per se* is connected to the upper structure 4, said boom structure possibly comprising lower and upper booms 14, 13 as well as accompanying force power means like hydraulic cylinders 15 and 16 or the like, as disclosed in Figure 3. The lower body 3 usually comprises arrangements for moving the construction machine, where said means in the case disclosed include a caterpillar assembly 2 known *per se*.

According to the present invention the vertical extension of the construction machine is performed such that the basic body of the device, which body is known *per se* and usually already existing, is divided into at least two separated main parts, between which zero, one or several extension modules 11, 11a, 11b in accordance with the present invention can be installed in order to provide an intermediate piece 8. Figure 3 discloses an arrangement in assembled state.

Modular adaptation pieces 9a, 10a, which facilitate the installation of said extension modules 11, 11a, 11b and the intermediate pieces 8a constituted thereof, are installed on the separated upper and, correspondingly, lower portions 4, 3 of the construction machine, said modular adaptation pieces suitably comprising flanges 18 or the like for receiving corresponding flanges or the like of the extension modules 11, 11a. Alternatively, said flanges are replaced/supplemented by fast connecting arrangements known *per se* (not shown). In the arrangement according to Figures 2 and 3 the upper modular adaptation piece 9 then will comprise the construction machine's turning machinery known *per se*, and the turning bearing 7 associated with said machinery, said bearing as such being attached to, e.g., an intermediate piece 1 of the caterpillar arrangement 2 at the basic machine. Thus, this modular adaptation piece 9 will be, in a way, connected to the upper portion 4 of the construction machine, where i.a. the machine's hoisting machinery and maneuvering arrangements are located.

Correspondingly, a lower adaptation part 10a is made, to which the construction machine's transportation machinery is connected, which machinery in the disclosed embodiment comprises a caterpillar arrangement 2, known *per se*, which has been detached from said intermediate piece 1. According to the present invention a necessary amount of extension modules 11, 11a are thereafter arranged between these modular adaptation pieces 9a, 10a in order to form an intermediate piece 8a, in which case the number of extension modules can also be zero or one.

Already when the heightening of the body is effected as a two module arrangement, i.e. without any actual intermediate piece 8a constituted by extension modules 11, 11a, a major advantage is achieved with respect to ease of transportation. Reasonably easily a heavy and large machine can be split into such portions, which can be transported in a considerably easier manner than the machine as an entity.

Further, when the heightening of the body of a construction machine is effected by means of an intermediate piece a constituted by one or several extension modules 11, 11a, one also achieves a possibility to change the height of the body of one individual machine by adding or reducing the number of superimposed extension modules 11, 11a. This gives the owner of the machine the possibility to use the crane also for other purposes than the ones which could be seen at the stage when the machine being designed, since the height of the machine body reasonably easily can be altered from less than one meter to several meters.

Figures 2, 2a and 2b disclose an example of different modular pieces, which the arrangement renders possible, where the extension modules 11 to the left in Figure 2 are essentially identical pieces, which can be superimposed, while the Figure disclosed to the right in Figure 2 discloses an embodiment where favorably several such superimposed extension modules 11 are replaced with one extension module 11a, which further is arranged in an inclined manner to render possible a widening of the caterpillar assembly, as will be discussed in more detail below. Again, the extension module 11b disclosed in Figure 2b as such is made asymmetric in order to effect different track gauges for the machine.

The height adjustment is facilitated, besides by the modular structure, by i.a. the following favorable characteristics of the present invention:
Favorably, the circuitry for hydraulic hoses, electrical wiring and the like, which interconnect different parts of the basic machine, are implemented in a self-winding manner at the point, where the body extension located. Then, when one performs an adjustment of the height there is no need to exchange any cabling and piping for new ones for the reason that the body height is changing, nor is there necessarily even any need to loosen any hosing or cabling during the height adjustment process.

E.g., hydraulic cylinders 17 and possibly a telescopic structure can be permanently or detachably installed at the adapting modules 9a, 10a and/or extension modules 11, 11a, 11b for heightening of the body, by means of which cylinders or telescopic structures the construction machine can be hoisted so that intermediate modules 11, 11a, 11b can be added to the extension structure or removed therefrom. By means of the same cylinder 17 and telescopic structure the machine is lowered back down into position when the adjustment is performed. Thus, there necessarily is no need for any external crane in order to perform the height adjustment.

The crane's own booms 13, 14 can also be utilized at the installing and removing of intermediate modules 11, 11a, 11b, since the hoisting reach of said booms extend to within the extension 8, 8a. As an aid one can then favorably use a special exchange tool (not shown), which is attachable to the end of the boom.

Production costs can also be saved, when identical or compatible modules 9a, 10a, 11, 11a, 11b can be used for different cranes and for cranes of different heights. The production of larger series reduces costs. A material crane, which is made higher in a modular manner, can further be implemented so that the crane is unable to tumble itself. This increases the crane safety and renders a costly load control apparatus unnecessary.

The modification of the body is performed in the following manner:
- the original lower body 3 of the basic machine is divided into portions such, that the transportation system, which in the disclosed embodiment includes the caterpillar assembly 2 and the intermediate piece 1, which interconnects the rollers, are detached from each other at some suitable point in order to form a part of the upper module 9,
- the intermediate piece 1 of the basic machine's lower body 3 as well as its turning bearings 7, which are required for turning the machine, are connected to the uppermost part of a modular body extension 9a, which is formed by the basic machine's lower structure 3, so that said intermediate piece including its bearings 7 and adaptater pieces 9a, which pieces constitute the uppermost part of the extension, in combination form the upper module 9.

The caterpillar assemblies 2 are connected with the lower modular body heightening arrangement 10a to form a new lower module 10, which is formed separately, which lower module structure favorably is implemented such that the caterpillar bands 2 are located at an essentially longer mutual distance than when they are attached to the lower body 3 of the basic machine. This can be achieved, e.g., by means of a modular part 10a which is wider than the original one, as disclosed in Figure 2a. Thus, a new lower body is actually formed.

Thus, the structure according to the present invention is favorably implemented in the following alternative or mutually completing manners:

The extension may comprise only a lower module 10 and an upper module 9, in which case the extension of the body will be of a standard height.

Alternatively, a necessary number of intermediate or extension modules 11, 11a, 11b of a suitable height are inserted between the lower and upper modules 9, 10 whereby the extent of the body heightening can be adjusted by increasing or reducing the number of superimposed intermediate modules 11, 11a, 11b by a number of 0 to "n" pieces mainly within the limits determined by the stability of the construction machine.

According to another embodiment of the present invention the intermediate modules 11, 11a, 11b included in the structure are not of a standard height, but the heightening structure 8a comprises several intermediate modules 11, 11a, 11b of optimized different heights, in which case an adjustable height variation can be implemented in a more diversified manner by combinations of different heights of intermediate modules 11, 11a, 11b.

According to still another embodiment of the present invention the lowest height of the adjustable extension 8, 8a is such that there are upper and lower modules 9, 10, implemented in different manners with respect to height and/or width, in which case the individual intermediate modules can be mutually of standard or different heights.

Favorably, the upper, lower and intermediate modules, 9a, 10a and 11, 11a, 11b, respectively, are provided with suitable alignment means, which facilitate the alignment during the installation and which if necessary can be implemented to support the structure in a lateral direction. Correspondingly, any hydraulic hoses and necessary electrical circuitry is favorably implemented as self retracting coiling in the area passing the modular body extension arrangement so that no hydraulic hoses, electrical wiring or the like need to be detached nor changed during the adjustment of the height of the body extension.

If necessary, the body extension arrangement 8, 8a can be provided with suitably implemented permanent or detachable hydraulic cylinders 17 and, if necessary, with telescopic booms, by means of which the complete machine or the intermediate and upper modules 11, 11a, 11b of the body heightening, respectively, as well as any overlying structures 13, 14, 15, 16... can be hoisted to such an extent that a removal or addition of one or several intermediate modules 11, 11a, 11b as well as a lowering to a new adjusted level will be successful without any external hoisting means.

The hoisting range of the crane booms is favorably implemented such that the end of a folding boom 13 can reach in within the modular body extension arrangement, whereby the crane's own booms 13, 14 with suitable arrangements can be utilized for adding or removing intermediate modules 11, 11a, 11b. Suitably, said intermediate modules 11, 11a, 11b are attached mutually or to said upper 9 or lower modules 10, e.g., by means of screws or suitable quick action couplings or, in some cases, by welding or in another suitable manner.

Favorably, the whole structure is implemented to constitute a non-overturnable structure by adapting the length of the caterpillar assemblies 2 and, correspondingly, the width of the lower module 10, which defines their mutual lateral distances e, e', i.e. the track gauge, as well as the diameters of the cylinders 15, 16 which operate the crane booms 13, 14 and further the crane's total mass and general structure in an optimal manner for the machine not to be able to overturn itself.

The implementation of a material handling crane provided with a modular body extension structure to constitute a non-overturnable construction widens the area of use for high body cranes, facilitates the transport and considerably improves the range of uses for the individual crane.

Above some favorable embodiments of the present invention have been disclosed, but it should be clear that the invention can be implemented in many other ways within the scope of the appended claims.

## Claims

1. A crane structure which can be extended with respect to its height and which is based on a modified digger, crane or the like basic construction machine known per se,
wherein said original basic construction machine includes
- a lower body (3) comprising arrangements (2) for moving the construction machine such as caterpillar rollers as well as an intermediate piece (1) which originally interconnected said arrangements,
- a turntable upper carriage structure (4),
- a turning bearing (7) between said turntable upper carriage structure and said intermediate piece (1),
**characterized by**
upper (9a) and an lower (10a) modular body heightening adapters which did not form a part of the original basic construction machine and which render possible a positioning of either none, one or another necessary amount of extension modules (11, 11a, 11b) in between parts (1, 2) of the original lower body (3),
wherein said lower body (3) of said basic construction machine has been modified in the following manner:
- the original lower body (3) of the basic machine has been split into portions so that said arrangements for moving the construction machine (2) on the one hand and said intermediate piece (1), said turning bearings (7) and the turntable upper carriage structure on the other hand have been mutually detached at some suitable point,
- said intermediate piece (1) has been connected to the upper modular body heightening adapter whereby said intermediate piece (1) with said turning bearings (7) and the uppermost part (9a) of the modular body heightening adapter together constitute an upper module (9),
- said arrangement for moving the construction machine (2) has been connected to the lower modular body heightening adapter (10a) to constitute a lower module.

2. A crane structure according to claim 1 wherein said lower module has been implemented in such a manner that caterpillar bands (2) are located essentially further apart than when they were connected to the original lower body (3) of the basic machine.

3. A structure as defined in claim 1 or 2, **characterized in that** said basic construction machine is provided with a suitable cab hoisting device so that the basic machine's own cab can be moved in a stepless manner within the moving range of said cab hoisting device.

4. A structure as defined in any one of the above claims **characterized in that** said basic constuction machine is provided with long booms (13, 14) suited for use in a crane, as well as provided with such appropriate hydraulic cylinders (15, 16) for operating said booms, which cylinders are suitable for crane operations and favorably also for performing a modular heightening operation.

5. A structure as defined in any one of claims 1 to 4, **characterized in that** the structure includes hoisting means such as hydraulic jacks (17) or the like, by means of which different parts (3, 4, 8, 8a, 11, 11a, and/or 11b) of the structure can be brought mutually apart and, correspondingly, against each other in a controlled manner.

6. A structure as defined in any one of claims 1 to 5, **characterized in that** any hydraulic hoses, any necessary electrical wiring and/or other conduits necessary for the operation of the basic construction machine included in the construction machine are implemented, at the modular body extension location, in a self winding manner.

7. A method for modifying a crane structure which can be extended with respect to its height and which is based on a modified digger, crane or the like basic construction machine known per se, wherein said original basic construction machine which has been implemented as an essentially unitary structure includes
- a lower body (3) comprising arrangements for moving the construction machine (2) such as caterpillar rollers as well as an intermediate piece (1) which originally interconnects said arrangements,
- a turntable upper carriage structure (4),
- a turning bearing (7) between said turntable upper carriage structure and said intermediate piece (1),
**characterized in that**
upper (9a) and lower (10a) modular body heightening adapters which do not form a part of said original basic construction machine and which render possible a positioning of either none, one or another necessary amount of extension modules (11, 11a, 11b) in between parts (1, 2) of the original lower body (3) are provided by the following steps:
- said original lower body (3) of said basic construction machine is divided into at least two main portions in such a manner that said arrangements for moving the construction machine (2) and said intermediate piece (1) are mutually detached at some suitable point, said turning bearings (7) and the turntable upper carriage structure remaining with said intermediate piece (1),
- said intermediate piece (1) is connected the upper modular body heightening adapter (9a), whereby said intermediate piece (1) with said turning bearings (7) and the uppermost part (9a) of the modular body heightening adapter together constitute an upper module (9),
- said arrangement for moving the construction machine (2) is connected to the lower modular body heightening adapter (10a) to constitute a lower module.

8. A method as defined in claim 7, **characterized in that** separate jack means (17) are utilized at the installation of said intermediate portions and/or said modules (8, 8a, and/or 11, 11a, respectively).

9. A method as defined in claim 8 or 9, **characterized in that** the construction machine's own crane boom arrangement (13, 14, 15, 16) is utilized at the installation of said intermediate portions and/or said modules (8, 8a, and/or 11, 11a, respectively).

## Patentansprüche

1. Kran, der in seiner Höhe vergrößerbar ist und auf einem modifizierten Bagger, Kran oder einer ähnlichen für sich bekannten Grund-Baumaschine beruht, wobei die ursprüngliche Grund-Baumaschine umfasst:
- ein unteres Aufbauteil (3) mit Einrichtungen (2) zur Bewegung der Baumaschine wie z.B. Raupen und ein ein Zwischenteil (1), das ursprünglich diese Einrichtungen verband,
- eine obere Aufbaustruktur (4) mit Drehtisch,
- ein Drehlager (7) zwischen der oberen Aufbaustruktur mit Drehtisch und dem Zwischenteil (1),
**dadurch gekennzeichnet,**
**dass** obere (9a) und untere (10a) modulare Aufbauerhöhungsadapter, die nicht Teil der originalen Grund-Baumaschine gewesen sind, vorgesehen sind und die Anbringung entweder keines, eines oder einer anderen notwendigen Zahl von Erhöhungsmodulen (11, 11a, 11b) zwischen den Teilen (1, 2) des ursprünglichen unteren Aufbauteils (3) ermöglichen,
wobei das untere Aufbauteil (3) der Grund-Baumaschine in der folgenden Weise modifiziert worden ist:
- das ursprüngliche untere Aufbauteil (3) der Grundmaschine ist derart in Teile aufgeteilt worden, dass die Einrichtungen zur Bewegung der Baumaschine (2) einerseits und das Zwischenteil (1), das Drehlager (7) und die obere Aufbaustruktur mit Drehtisch andererseits voneinander an einer geeigneten Stelle gelöst worden sind,
- das Zwischenteil (1) ist mit dem oberen modularen Aufbauerhöhungsadapter verbunden worden, wodurch das Zwischenteil (1) mit dem Drehlager (7) und der oberste Teil (9a) des modularen Aufbauerhöhungsadapters zusammen ein oberes Modul (9) bilden,
- die Einrichtung zur Bewegung der Baumaschine (2) ist mit dem unteren modularen Aufbauerhöhungsadapter (10a) verbunden worden, um ein unteres Modul zu bilden.

2. Kran nach Anspruch 1, bei dem das untere Modul derart erweitert worden ist, dass die Raupenbänder (2) wesentlich weiter voneinander entfernt sind, als als sie noch mit dem ursprünglichen unteren Aufbauteil (3) der Grundmaschine verbunden waren.

3. Kran nach Anspruch 1 oder 2, **dadurch gekennzeichnet, dass** die Grund-Baumaschine mit einer geeigneten Kabinenhubvorrichtung versehen ist, so dass die eigene Kabine der Grundmaschine stufenlos im Bewegungsbereich der Kabinenhubvorrichtung bewegbar ist.

4. Kran nach einem der vorstehenden Ansprüche, **dadurch gekennzeichnet, dass** die Grund-Baumaschine mit langen für den Gebrauch mit einem Kran geeigneten Auslegerarmen (13, 14) und mit geeigneten hydraulischen Zylindern (15, 16) zum Betrieb der Arme versehen ist, welche Zylinder für Betriebsweisen als Kran und vorteilhaft auch zur Durchführung einer Modul-Huboperation geeignet sind.

5. Kran nach einem der Ansprüche 1 bis 4, **dadurch gekennzeichnet, dass** er Hubeinrichtungen wie Hydraulikzylinder (17) oder dergleichen umfasst, mittels deren verschiedene Teile (3, 4, 8, 8a, 11, 11a und/oder 11 b) der Krankonstruktion voneinander entfernt und entsprechend in gesteuerter Weise auch gegeneinander geführt werden können.

6. Kran nach einem der Ansprüche 1 bis 5, **dadurch gekennzeichnet, dass** alle hydraulischen Schläuche, alle notwendigen elektrischen Kabel und/oder andere für den Betrieb der Grund-Baumaschine notwendigen Leitungen in der Baumaschine im Bereich der modularen Aufbauerweiterung in einer selbstaufrollenden Form verwirklicht sind.

7. Verfahren zur Modifikation eines Krans, der höhlenvergrößerbar ist und auf einem modifizierten Bagger, Kran oder einer ähnlichen für sich bekannten Grund-Baumaschine beruht, wobei die ausgestaltete ursprüngliche Grund-Baumaschine als im Wesentlichen einheitliche Struktur umfasst:
- ein unteres Aufbauteil (3) mit Einrichtungen (2) zur Bewegung der Baumaschine wie z.B. Raupen und einem Zwischenteil (1), das ursprünglich die Einrichtungen verband,
- eine obere Aufbaustruktur (4) mit Drehtisch,
- ein Drehlager (7) zwischen der oberen Aufbaustruktur mit Drehtisch und dem Zwischenteil (1),
**dadurch gekennzeichnet,**
**dass** obere (9a) und untere (10a) modulare Aufbauerhöhungsadapter, die nicht Teil der originalen Grund-Baumaschine sind und die Positionierung entweder keines, eines oder einer anderen notwendigen Zahl von Vergrößerungsmodulen (11, 11a, 11b) zwischen den Teilen (1, 2) des originalen unteren Aufbauteils (3) gestattet, durch die folgenden Schritte bereit gestellt werden:
- das ursprüngliche untere Aufbauteil (3) der Grund-Baumaschine wird in der Weise in mindestens zwei Hauptteile unterteilt, dass die Einrichtungen zur Bewegung der Baumaschine (2) und des Zwischenteils (1) an einer geeigneten Stelle von einander getrennt werden, wobei die Drehlager (7) und die obere Drehtischstruktur mit dem Zwischenteil (1) verbleiben;
- das Zwischenteil (1) wird mit dem oberen modularen Aufbauerhöhungsadapter (9a) verbunden, worauf das Zwischenteil (1) mit dem Drehlager (7) und der oberste Teil (9a) des modularen Aufbauerhöhungsadapters zusammen ein oberes Modul (9) bilden,
- die Einrichtung zur Bewegung der Baumaschine (2) wird mit dem unteren modularen Aufbauerhöhungsadapter (10a) verbunden, um ein unteres Modul zu bilden.

8. Verfahren nach Anspruch 7, **dadurch gekennzeichnet, dass** bei der Installation des Zwischenteils und/oder der Module (8, 8a, und/oder 11 bzw. 11 a) separate Zylinder (17) verwendet werden.

9. Verfahren nach Anspruch 7, **dadurch gekennzeichnet, dass** bei der Installation des Zwischenteils und/oder der Module (8, 8a und/oder 11 bzw. 11a) die eigene Kranauslegeranordnung (13, 14, 15, 16) der Baumaschine verwendet wird.

## Revendications

1. Structure de grue qui peut être étendue par rapport à son hauteur et qui est basée sur un excavateur modifié, grue ou machine de construction basique analogue connue en tant que telle, où ladite machine de construction de base initiale comprend:
- un corps inférieur (3) comprenant des agencements (2) pour déplacer la machine de construction comme des rouleaux de caterpillar ainsi qu'une pièce intermédiaire (1) qui a interconnecté initialement lesdits agencements,
- une structure de chariot supérieur de plateau tournant (4),
- un palier tournant (7) entre ladite structure de chariot supérieur de plateau tournant et ladite pièce intermédiaire (1),
**caractérisée par**
des adaptateurs d'élévation de corps modulaires supérieur (9a) et inférieur (10a) qui ne faisaient pas partie de la machine de construction de base initiale et qui rendent possible un positionnement soit d'aucun, d'un ou d'une autre quantité nécessaire de modules d'extension (11, 11a, 11b) entre les parties (1, 2) du corps inférieur initial (3),
où ledit corps inférieur (3) de ladite machine de construction de base a été modifié de la manière suivante:
le corps inférieur initial (3) de la machine de base a été divisé en portions de sorte que lesdits agencements pour déplacer la machine de construction (2), d'une part, et ladite pièce intermédiaire (1), lesdits paliers tournants (7) et la structure de chariot supérieur de plateau tournant, d'autre part, ont été détachés mutuellement à un point approprié,
- ladite pièce intermédiaire (1) a été reliée à l'adaptateur d'élévation de corps modulaire supérieur, par quoi ladite pièce intermédiaire (1) avec lesdits paliers tournants (7) et la partie la plus haute (9a) de l'adaptateur d'élévation de corps modulaire constitue ensemble un module supérieur (9),
- ledit agencement pour déplacer la machine de construction (2) a été connecté à l'adaptateur d'élévation de corps modulaire inférieur (10a) pour constituer un module inférieur.

2. Structure de grue selon la revendication 1, où ledit module inférieur a été mis en oeuvre de telle manière que des bandes de caterpillar (2) sont sensiblement plus espacées que lorsqu'elles étaient connectées au corps inférieur initial (3) de la machine de base.

3. Structure selon la revendication 1 ou 2,
**caractérisée en ce que** ladite machine de construction de base présente un dispositif de levage de cabine approprié de sorte que la cabine propre de la machine de base peut être déplacée progressivement dans la plage de mouvement dudit dispositif de levage de cabine.

4. Structure selon l'une des revendications précédentes, **caractérisée en ce que** ladite machine de construction de base présente des flèches longues (13, 14) aptes à être utilisées dans une grue, ainsi que des vérins hydrauliques appropriés (15, 16) pour l'actionnement desdites flèches, lesdits vérins convenant pour des opérations de grue et avantageusement également pour exécuter une opération d'élévation modulaire.

5. Structure selon l'une des revendications 1 à 4, **caractérisée en ce que** la structure comprend des moyens de levage comme des vérins hydrauliques (17) ou analogue, au moyen desquels les différentes parties (3, 4, 8, 8a, 11, 11a et/ou 11b) de la structure peuvent être mutuellement espacées et, d'une manière correspondante, rapprochées d'une manière contrôlée.

6. Structure selon l'une des revendications 1 à 5, **caractérisée en ce que** tout tuyau souple hydraulique, tout câblage électrique nécessaire et/ou autres conduits nécessaires pour le fonctionnement de la machine de construction de base inclus dans la machine de construction sont mis en oeuvre, à l'emplacement de l'extension de corps modulaire, selon une manière à auto-enroulement.

7. Procédé pour modifier une structure de grue qui peut être étendue par rapport à son hauteur et qui est basée sur une excavatrice modifiée, grue ou machine de construction de base analogue connue en tant que telle, où ladite machine de construction de base initiale, qui a été mise en oeuvre comme une structure essentiellement unitaire comprend:
- un corps inférieur (3) comprenant des agencements pour déplacer la machine de construction (2) comme des rouleaux de caterpillar ainsi qu'une pièce intermédiaire (1) qui relie initialement lesdits agencements,
- une structure de chariot supérieur de plateau tournant (4),
- un palier tournant (7) entre ladite structure de chariot supérieur de plateau tournant et ladite pièce intermédiaire (1),
**caractérisé en ce que** des adaptateurs d'élévation de corps modulaire supérieur (9a) et inférieur (10a), qui ne font pas partie de ladite machine de construction de base initiale et qui rendent possible un positionnement d'aucun, d'un ou d'une autre quantité nécessaire de modules d'extension (11, 11a, 11b) entre les parties (1, 2) du corps inférieur initial (3) sont réalisés par les étapes suivantes:
- ledit corps inférieur initial (3) de ladite machine de construction de base est divisé en au moins deux portions principales de telle manière que lesdits agencements pour déplacer la machine de construction (2) et ladite pièce intermédiaire (1) sont mutuellement détachés à un point approprié, lesdits paliers tournants (7) et la structure de chariot supérieure de plateau tournant restant avec ladite pièce intermédiaire (1),
- ladite pièce intermédiaire (1) est reliée à l'adaptateur d'élévation de corps modulaire supérieur (9a), par quoi ladite pièce intermédiaire (1) avec lesdits paliers tournants (7) et la partie la plus haute (9a) de l'adaptateur d'élévation de corps modulaire constituent ensemble un module supérieur (9),
- ledit agencement pour déplacer la machine de construction (2) est relié à l'adaptateur d'élévation de corps modulaire inférieur (10a) pour constituer un module inférieur.

8. Procédé selon la revendication 7, **caractérisé en ce que** des moyens de vérin de levage séparés (17) sont utilisés à l'installation desdites portions intermédiaires et/ou desdits modules (8, 8a) et/ou (11, 11a), respectivement.

9. Procédé selon la revendication 8 ou 9, **caractérisé en ce que** l'agencement de flèche de grue (13, 14, 15, 16) propre à la machine de construction est utilisé lors de l'installation desdites portions intermédiaires et/ou desdits modules (8, 8a) et/ou (11, 11a), respectivement.
